# EUROPÄISCHE PATENTSCHRIFT

(11) **EP 2 598 593 B1**
(45) Veröffentlichungstag und Bekanntmachung des Hinweises auf die Patenterteilung: **23.04.2014**
(21) Anmeldenummer: 11733883.0
(22) Anmeldetag: 20.07.2011
(51) Int. Cl.: C09K 5/04, C10M 105/70, C10M 171/02, C10M 169/02

(54) **VERWENDUNG VON IONISCHEN FLÜSSIGKEITEN MIT EINEM GEHALT AN IONISCHEN POLYMEREN**
USE OF IONIC LIQUIDS WITH A CONTENT OF IONIC POLYMERS
UTILISATION DE LIQUIDES IONIQUES PRÉSENTANT UNE CERTAINE TENEUR EN POLYMÈRES IONIQUES

(30) Priorität: 07.02.2011 EP 11153466; 26.07.2010 EP 10170775
(43) Veröffentlichungstag der Anmeldung: 05.06.2013
(73) Patentinhaber: BASF SE, 67056 Ludwigshafen (DE)
(72) Erfinder: ALEMANY, Aurelie, 70197 Stuttgart (DE); GERHARD, Dirk, 68163 Mannheim (DE); URTEL, Bolette, 67240 Bobenheim-Roxheim (DE)
(86) Internationale Anmeldenummer: PCT/EP2011/062431
(87) Internationale Veröffentlichungsnummer: WO 2012/016835

(56) Entgegenhaltungen:
- EP-A1- 1 867 706
- WO-A2-2011/026822
- OHNO H ET AL: "Development of new class of ion conductive polymers based on ionic liquids", ELECTROCHIMICA ACTA, ELSEVIER SCIENCE PUBLISHERS, BARKING, GB, Bd. 50, Nr. 2-3, 30. November 2004 (2004-11-30), Seiten 254-260, XP004628822, ISSN: 0013-4686, DOI: 10.1016/J.ELECTACTA.2004.01.091
- Marc Uerdingen: "Ionic liquids as lubricants" In: "Handbook of green cheminstry", 15. Juli 2010 (2010-07-15), WILEY-VCH, Online, XP002667129, ISBN: 9783527628698 Bd. 6, Seiten 203-219, Vicosity Index and Pour Point

## Beschreibung

Die vorliegende Erfindung betrifft Verfahren zur Einstellung der Viskosität eines Salzes mit einem Schmelzpunkt kleiner 100°C bei Normaldruck (kurz ionische Flüssigkeit genannt), welches dadurch gekennzeichnet ist, dass der ionischen Flüssigkeit eine oligomere oder polymere Verbindung zugesetzt wird, welche einen Gehalt von mindestens 0,01 Mol kovalent gebundener Säuregruppen/100g Verbindung hat, wobei zumindest 1 % der Säureguppen als Salz mit einem organische Kation, welches mindestens ein Heteroatom, ausgewählt aus Stickstoff, Sauerstoff, Schwefel oder Phosphor enthält, vorliegen.

Ionische Flüssigkeiten sind für verschiedenste technische Anwendungen von großem Interesses. Neben Anwendungen als Lösemittel oder Elektrolyt kommen Anwendungen als Schmiermittel, Hydraulikflüssigkeit oder Betriebsflüssigkeit, als Wärmeträger, zum Wärmetransport oder als Abdicht- bzw. Absperrflüssigkeit in Betracht.

Die Anwendung von ionischen Flüssigkeiten als Absorptionsmittel in Wärmepumpen, d.h. als Betriebsflüssigkeit, ist z.B. aus WO 2005/113702 bekannt.
Verwendungen von ionischen Flüssigkeiten als Hydraulikflüssigkeit, Schmiermittel, Betriebsflüssigkeit, Absperr- oder Abdichtflüssigkeit sind z.B. auch in WO 2006/087333 aufgeführt. Aus der früheren, nicht vorveröffentlichten EP-Anmeldung 09169389.5 (PF 62527) ist unter anderem auch der Zusatz von ionischen Verbindungen zur Einstellung der Viskosität ionischer Flüssigkeiten beschrieben.

Bei den vorstehend genannten Verwendungen müssen geeignete ionischen Flüssigkeiten eine Vielfalt von erforderlichen Eigenschaften erfüllen. Eine wesentliche Eigenschaft bei all diesen Anwendungen ist die Viskosität. Oft werden viele, aber nicht alle erforderlichen Eigenschaften von einer ausgewählten ionischen Flüssigkeit erfüllt. Die übrigen, nicht erfüllten Eigenschaften müssen, wenn möglich, entsprechend angepasst werden.

So kann z.B. für eine beabsichtigte Verwendung die Viskosität der ansonsten geeigneten ionischen Flüssigkeit nicht hoch genug sein.

Unerwünscht ist häufig auch, wenn die Viskosität einer ausgewählten ionische Flüssigkeit eine zu starke Temperaturabhängigkeit im Temperaturbereich der jeweiligen Anwendung hat.

Gewünscht sind daher Möglichkeiten, die Viskosität einer beliebigen ionischen Flüssigkeit in einfacher Weise einzustellen, insbesondere die Viskosität zu erhöhen und/oder ihre Temperaturabhängigkeit zu verringern. Dazu verwendete Zusatzstoffe müssen min der ionischen Flüssigkeit gut löslich sein und homogene Zusammensetzungen ergeben.

Demgemäß wurde das eingangs definierte Verfahren gefunden. Gefunden wurden auch Verwendungen von Zusammensetzungen, welche ionische Flüssigkeiten und oligomere oder polymere Verbindungen enthalten.

### Zur ionischen Flüssigkeit

Gegenstand des erfindungsgemäßen Verfahrens ist die Einstellung der Viskosität einer ionischen Flüssigkeit durch Zugabe einer Verbindung.

Bei der ionischen Flüssigkeit handelt es sich um ein Salz mit einem Schmelzpunkt kleiner 100°C bei 1 bar.

Vorzugsweise hat die ionische Flüssigkeit einen Schmelzpunkt kleiner 70°C und besonders bevorzugt kleiner 30°C.

In einer besonders bevorzugten Ausführungsform ist die ionische Flüssigkeit unter Normalbedingungen (1 bar, 21 °C) flüssig.

Die ionische Flüssigkeit ist ein Salz und besteht daher aus mindestens einem Kation und mindestens einem Anion.

Bevorzugte ionische Flüssigkeiten enthalten zumindest eine organische Verbindung als Kation, ganz besonders bevorzugt enthalten sie ausschließlich organische Verbindungen als Kationen.

Geeignete organische Kationen sind insbesondere organische Verbindungen mit Heteroatomen, wie Stickstoff, Schwefel, Sauerstoff oder Phosphor, besonders bevorzugt handelt es sich um organische Verbindungen mit einer kationischen Gruppe ausgewählt aus einer Ammonium - Gruppe, einer Oxonium -Gruppe, einer Sulfonium - Gruppe oder einer Phosphonium - Gruppe.

In einer besonderen Ausführungsform handelt es sich bei den ionischen Flüssigkeiten um Salze mit Ammonium - kationen, worunter hier nicht-aromatische Verbindungen mit lokalisierter positiver Ladung am Stickstoffatom, z.B. Verbindungen mit vierbindigem Stickstoff (quaternäre Ammoniumverbindungen) oder auch Verbindungen mit dreibindigem Stickstoff, wobei eine Bindung eine Doppelbindung ist, oder aromatische Verbindungen mit delokalisierter positiver Ladung und mindestens einem, vorzugsweise einem oder zwei Stickstoffatomen im Ringsystem verstanden werden.

Besonders bevorzugte organische Kationen sind quaternäre Ammoniumkationen mit vorzugsweise drei oder vier aliphatischen Substituenten, besonders bevorzugt C1- bis C12- Alkylgruppen, am Stickstoffatom.

Besonders bevorzugt sind auch organische Kationen, die ein heterocyclisches Ringsystem mit ein oder zwei Stickstoffatomen als Bestandteil des Ringsystems enthalten. In Betracht kommen monocyclische, bicyclische, aromatische oder nicht-aromatische Ringsysteme. Genannt seien z.B. bicyclische Systeme, wie sie in WO 2008/043837 beschrieben sind. Bei den bicyclischen Systemen der WO 2008/043837 handelt es sich um Diazabicyclo-derivate, vorzugsweise aus einem 7- und einem 6 Ring, welche eine Amidiniumgruppe enthalten; genannt sei insbesondere das 1,8-Diazabicyclo(5.4.0)undec-7-enium- kation.

Ganz besonders bevorzugte organische Kationen enthalten ein heterocyclischers Ringsystem, vorzugsweise ein fünf- oder sechsgliedriges heterocyclisches Ringsystem, mit ein oder zwei Stickstoffatomen als Bestandteil des heterocyclischen Ringsystems.

Als Kationen in Betracht kommen z.B. Pyridinium-Kationen, Pyridazinium-Kationen, Pyrimidinium-Kationen, Pyrazinium-Kationen, Imidazolium-Kationen, Pyrazolium-Kationen, Pyrazolinium-Kationen, Imidazolinium-Kationen, Thiazolium-Kationen, Triazolium-Kationen, Pyrrolidinium-Kationen und Imidazolidinium-Kationen. Diese Kationen sind z.B. in WO 2005/113702 aufgeführt. Soweit es für eine positive Ladung am Stickstoffatom oder im aromatischen Ringsystem notwendig ist, sind die Stickstoffatome jeweils durch ein H-Atom oder vorzugsweise eine organische Gruppen mit im Allgemeinen nicht mehr als 20 C-Atomen, vorzugsweise eine Kohlenwasserstoffgruppe, insbesondere eine C1 bis C16 Alkylgruppe, insbesondere eine C1 bis C10, besonders bevorzugt eine C1 bis C4 Alkylgruppen substituiert.

Auch die Kohlenstoffatome des Ringsystems können durch organische Gruppen mit im Allgemeinen nicht mehr als 20 C-Atomen, vorzugsweise eine Kohlenwasserstoffgruppe, insbesondere eine C1 bis C16 Alkylgruppe, insbesondere eine C1 bis C10, besonders bevorzugt eine C1 bis C4 Alkylgruppen substituiert sein.

Besonders bevorzugte Ammonium-Kationen sind quatemäre Ammonium-Kationen, Imidazolium - Kationen, Pyrimidinium- Kationen und Pyrazolium-Kationen.

Ganz besonders bevorzugt sind Imidazolium - Kationen, insbesondere Imidazolium-Kationen der Formel I 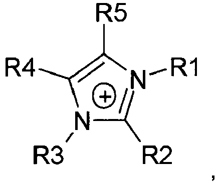 worin
R1 und R3 unabhängig voneinander für ein H-Atom oder eine organischen Gruppe mit 1 bis 20 C-Atomen stehen,
R2, R4, und R5 unabhängig voneinander für ein H-Atom oder für eine organische Gruppe mit 1 bis 20 C-Atomen stehen.
R1 bis R5 haben die bevorzugten Bedeutungen wie sie weiter unten zu Formel II angegeben sind

Bei dem Anion kann es sich um ein organisches oder anorganisches Anion handeln.

Als Anion in Betracht kommen insbesondere solche aus
der Gruppe der Halogenide und halogenhaltigen Verbindungen der Formeln:
F-, Cl-, Br-, I-, BF4-, PF6-, AlCl4-, Al2Cl7-, Al3Cl10-, AlBr4-, FeCl4-, BCl4-, SbF6-, AsF6, -ZnCl3-, SnCl3-, CuCl2-, CF3SO3-, (CF3SO3)2N-, CF3CO2-, CCl3CO2-,
oder Gruppe
CN-, SCN-, OCN-, NO2-, N03-, N(CN)- ;
der Gruppe der Sulfate, Sulfite und Sulfonate der allgemeinen Formeln:
SO₄²⁻, HSO₄⁻, SO₃²-, HSO₃⁻, R^{a}OSO₃⁻, R^{a}SO₃⁻;
der Gruppe der Phosphate der allgemeinen Formeln:
PO₄³-, HPO₄²⁻, H₂PO₄⁻, R^{a}PO₄²⁻, HR^{a}PO₄⁻, R^{a}R^{b}PO₄⁻;
der Gruppe der Phosphonate und Phosphinate der allgemeinen Formel:
R^{a}HPO₃⁻,R^{a}R^{b}PO₂⁻, R^{a}R^{b}PO₃⁻;
der Gruppe der Phosphite der allgemeinen Formeln:
PO₃³⁻, HPO₃²⁻, H₂PO₃⁻, R^{a}PO₃²⁻, R^{a}HPO₃⁻, R^{a}R^{b}PO₃⁻;
der Gruppe der Phosphonite und Phosphinite der allgemeinen Formel:
R^{a}R^{b}PO₂⁻, R^{a}HPO₂⁻, R^{a}R^{b}PO⁻, R^{a}HPO⁻;
der Gruppe der Carboxylate der allgemeinen Formeln:
R^{a}COO⁻;
der Gruppe der Borate der allgemeinen Formeln:
BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})-, B(HSO₄)⁻, B(R^{a}SO₄)⁻;
der Gruppe der Boronate der allgemeinen Formeln:
R^{a}BO₂²⁻, R^{a}R^{b}BO⁻;
der Gruppe der Carbonate und Kohlensäureester der allgemeinen Formeln:
HCO₃⁻, CO₃²⁻, R^{a}CO₃⁻;
der Gruppe der Silikate und Kieselsäuresäureester der allgemeinen Formeln:
SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
der Gruppe der Alkyl- bzw. Arylsilan-Salze der allgemeinen Formeln:
R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻;
der Gruppe der Carbonsäureimide, Bis(sulfonyl)imide und Sulfonylimide der allgemeinen Formeln: 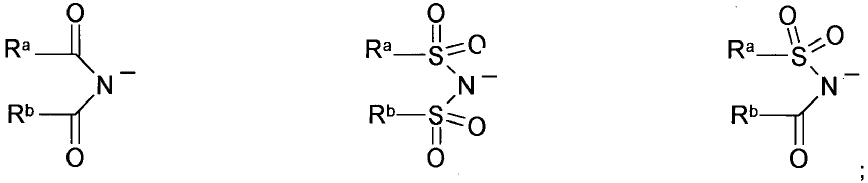 der Gruppe der Methide der allgemeinen Formel: 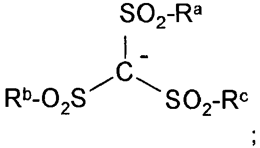 der Gruppe der Alkoxide und Aryloxide der allgemeinen Formeln:
R^{a}O⁻;
der Gruppe der Halometallate der allgemeinen Formel
[MᵣHalₜ]^{s-},
wobei M für ein Metall und Hal für Fluor, Chlor, Brom oder Iod steht, r und t ganze positive Zahlen sind und die Stöchiometrie des Komplexes angeben und s eine ganze positive Zahl ist und
die Ladung des Komplexes angibt;
der Gruppe der Sulfide, Hydrogensulfide, Polysulfide, Hydrogenpolysulfide und Thiolate der allgemeinen Formeln:
S², HS⁻, [HSᵥ]²⁻, [HSᵥ]⁻, [R^{a}S]⁻,
wobei v eine ganze positive Zahl von 2 bis 10 ist; und
der Gruppe der komplexen Metallionen wie Fe(CN)₆³-, Fe(CN)₆⁴-, MnO₄-, Fe(CO)₄⁻.

In den vorstehenden Anionen bedeuten R^{a}, R^{b}, R^{c} und R^{d} unabhängig voneinander jeweils
Wasserstoff;
C₁-C₃₀-Alkyl und deren aryl-, heteroaryl-, cycloalkyl-, halogen-, hydroxy-, amino-, carboxy-, formyl-, -O-, -CO-, -CO-O- oder-CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q ≤ 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
C₃-C₁₂-Cycloalkyl und deren aryl-, heteroaryl-, cycloalkyl-, halogen-, hydroxy-, amino-, carboxy-, formyl-, -O-, -CO- oder-CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{q}F_{2(q-a)-(1-b})H_{2a-b} mit q ≤ 30, 0 ≤ a ≤ q und b = 0 oder 1; C₂-C₃₀-Alkenyl und deren aryl-, heteroaryl-, cycloalkyl-, halogen-, hydroxy-, amino-, carboxy-, formyl-, -O-, -CO- oder-CO-O-substituierte Komponenten, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1;
C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{q}F_{2(q-a)-3(1-b)}H_{2a-3b} mit q≤30,0≤a≤q und b = 0 oder 1;
Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethylphenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

In den vorstehenden Anionen bedeuten R^{a}, R^{b}, R^{c} und R^{d} bevorzugt unabhängig voneinander jeweils ein Wasserstoffatom oder eine C1 bis C12-Alkylgruppe.

In den vorstehenden Anionen bedeuten Ra, Rb, Rc und Rd bevorzugt unabhängig voneinander jeweils ein Wasserstoffatom oder eine C1 bis C12-Alkylgruppe.

Als Anionen genannt seien z.B. Chlorid; Bromid; Iodid; Thiocyanat; Hexafluorophosphat; Trifluormethansulfonat; Methansulfonat; die Carboxylate, insbesondere Formiat; Acetat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C1-C4-Dialkylphosphate; Propionat; Tetrachloroaluminat; Al2Cl7-; Chlorozinkat; Chloroferrat; Bis(trifluoromethylsulfonyl)imid; Bis(pentafluoroethylsulfonyl)imid; Bis(methylsulfonyl)imid; Bis(p-Tolylsulfonyl)imid; Tris(trifluoromethylsulfonyl)methid; Bis(pentafluoroethylsulfonyl)methid; p-Tolylsulfonat; Tetracarbonylcobaltat; Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[Salicylato(2-)]borat, Bis[oxalato(2-)]borat, Bis[1,2-benzoldiolato(2-)O,O']borat, Tetracyanoborat, Tetrafluoroborat; Dicyanamid; Tris(pentafluoroethyl)trifluorophosphat; Tris(heptafluoropropyl)trifluorophosphat, cyclische Arylphosphate wie Brenzcatecholphosphat (C6H4O2)P(O) und Chlorocobaltat.

Besonders bevorzugt Anionen sind solche aus der Gruppe
der Alkylsulfate
R^{a}OSO₃⁻,
wobei R^{a} für eine C1-bis C12 Alkylgruppe, vorzugsweise für eine C1-C6 Alkylgruppe steht,
der Alkylsulfonate
R^{a}SO₃⁻;
wobei Rₐ für eine C1-bis C12 Alkylgruppe, vorzugsweise für eine C1-C6 Alkylgruppe steht,
der Halogenide, insbesondere Chlorid und Bromid und
der Pseudohalogenide, wie Thiocyanat, Dicyanamid,
der Carboxylate R^{a}COO-;
wobei R^{a} für eine C1-bis C20 Alkylgruppe, vorzugsweise für eine C1-C8 Alkylgruppe steht, insbesondere Acetat,
der Phosphate,
insbesondere der Dialkylphosphate der Formel R^{a}R^{b}PO₄⁻, wobei R^{a} und R^{b} unabhängig voneinander für eine C1 bis C6 Alkylgruppe stehen; insbesondere stehen R^{a} und R^{b} für die gleiche Alkylgruppe, genannt seien Dimethylphosphat und Diethylphosphat
und der Phosphonate, insbesondere der Monoalkylphosphonsäureester der Formel R^{a}R^{b}PO₃, wobei R^{a} und R^{b} unabhängig voneinander für eine C1 bis C6 Alkylgruppe stehen.

Ganz besonders bevorzugte Anionen sind
Chlorid, Bromid, Hydrogensulfat, Tetrachloroaluminat, Thiocyanat, Dicyanamid, Methylsulfat, Ethylsulfat, Methansulfonat, Triflat (CF₃SO₃⁻), Formiat, Acetat, Dimethylphosphat, Diethylphosphat, p-Tolylsulfonat, Tetrafluoroborat und Hexafluorophosphat, Methylmethylphosphonat und Methylphosphonat.

In einer bevorzugten Ausführungsform handelt es sich um Anionen, welche eine Sulfat- oder Sulfonatgruppe enthalten, insbesondere um Sulfate der Formel Z-SO₄- oder Sulfonate der Formel Z-SO₃-, wobei Z für eine organische Gruppe mit 1 bis 10 C-Atomen, vorzugsweise eine C1-bis C10-Alkylgruppe oder für fluorierte organische Gruppen (Triflat) und besonders bevorzugt für eine Methyl- oder Ethylgruppe steht. Bei ionischen Flüssigkeiten mit derartigen Anionen, auch mit Gemischen derartiger Anionen, z.B. beliebigen Gemischen ionischer Flüssigkeiten mit Triflat, Alkylsulfonaten und/oder Alkylsulfaten als Anion, ist oft eine Korrosion in Kontakt mit Metallen, z.B. Stählen, insbesondere unedlen Stähle, wie Kohlenstoff-Eisen Stählen ohne weitere Legierungsbestandteile, zu beobachten. Durch den Zusatz der oligomeren oder polymeren Verbindung mit den organischen Kationen kann diese Korrosion vermindert werden.

Besonders bevorzugte ionische Flüssigkeiten bestehen ausschließlich aus einem organischen Kation mit einem der vorstehenden Anionen.

Das Molgewicht der ionischen Flüssigkeiten ist vorzugsweise kleiner 2000g/mol, besonders bevorzugt kleiner 1500 g/mol, besonders bevorzugt kleiner 1000 g/mol und ganz besonders bevorzugt kleiner 750 g/mol; in einer besonderen Ausführungsform liegt das Molgewicht zwischen 100 und 750 bzw. zwischen 100 und 500 g/mol.

In einer besonderen Ausführungsform handelt es sich um Imidazoliumverbindungen, besonders bevorzugt um Imidazoliumverbindungen der Formel II 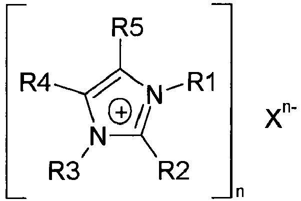 worin
R1 und R3 unabhängig voneinander für ein H-Atom oder einen organischen Gruppe mit 1 bis 20 C-Atomen stehen
R2, R4, und R5 unabhängig voneinander für ein H-Atom oder für eine organische Gruppe mit 1 bis 20 C-Atomen stehen,
X für ein Anion steht, und
n für 1, 2 oder 3 steht.

Vorzugsweise steht mindestens einer der Reste R1 und R3 für eine organische Gruppe, insbesondere stehen beide Reste R1 und R3 für eine organische Gruppe, insbesondere eine organische Gruppe, die 1 bis 10 C-Atome enthält. Besonders bevorzugt handelt es sich um eine Kohlenwasserstoffgruppe, welche keine weiteren Heteroatome aufweist, z.B. um eine gesättigte oder ungesättigte aliphatische Gruppe, eine aromatische Gruppe oder eine Kohlenwasserstoffgruppe, welche sowohl aromatische als auch aliphatische Bestandteile aufweist. Insbesondere stehen R1 und R3 unabhängig voneinander für eine C1 bis C10 Alkylgruppe, eine C1 bis C10 Alkenylgruppe, z.B. eine Allylgruppe, eine Phenylgruppe, eine Benzylgruppe; ganz besonders bevorzugt stehen R1 und R3 unabhängig voneinander für eine C1 bis C4 Alkylgruppe, z.B. eine Methylgruppe, Ethylgruppe, Propylgruppe, i-Propylgruppe oder n-Butylgruppe.

R2, R4 und R5 stehen vorzugsweise unabhängig voneinander für ein H-Atom oder für eine organische Gruppe, die 1 bis 10 C-Atome enthält. Besonders bevorzugt handelt es sich bei R2, R4 und R5 um ein H-Atom oder um eine Kohlenwasserstoffgruppe, welche keine weiteren Heteroatome aufweist, z.B. um eine aliphatische Gruppe, eine aromatische Gruppe oder eine Kohlenwasserstoffgruppe, welche sowohl aromatische als auch aliphatische Bestandteile aufweist. Ganz besonders bevorzugt handelt es sich um ein H-Atom oder eine C1 bis C10 Alkylgruppe, eine Phenylgruppe oder eine Benzylgruppe. Insbesondere handelt es sich um ein H-Atom oder eine C1 bis C4 Alkylgruppe, z.B. eine Methylgruppe, Ethylgruppe, Propylgruppe, i-Propylgruppe oder n-Butylgruppe. In einer besonderen Ausführungsform handelt es sich bei R2, R4 und R5 um eine H-Atom.

Die Variable n steht vorzugsweise für 1.

Als Anionen X und bevorzugte Anionen X kommen die oben aufgeführten in Betracht.

Als geeignete ionische Flüssigkeiten seien z.B. solche genannt, die als Kation
Methyl-tri-(1-butyl)-ammonium, 2-Hydroxyethylammonium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1,3-Diethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethyl-imidazolium, 1,4,5-Trimethyl-3-butylimidazolium oder 1,4,5-Trimethyl-3-octylimidazolium;
und als Anion
die obigen Anionen und bevorzugte Anionen
enthalten.

Als ionische Flüssigkeiten seien insbesondere. genannt:
1,3-Dimethylimidazolium-methylsulfat, 1,3-Dimethylimidazolium-ethylsulfat, 1,3-Dimethylimidazolium-hydrogensulfat, 1,3-Dimethylimidazolium-dimethylphosphat, 1,3 Dimethylimidazoliumacetat, 1,3-Dimethylimidazolium-methansulfonat, 1,3-Dimethylimidazolium-ethansulfonat, 1,3-Dimethylimidazolium triflat,
1,3-Diethylimidazolium-methylsulfat, 1,3-Diethylimidazolium-ethylsulfat, 1,3-Diethylimidazoliumhydrogensulfat, 1,3-Diethylimidazolium-dimethylphosphat, 1,3 Diethylimidazoliumacetat, 1,3-Diethylimidazolium-methansulfonat, 1,3-Diethylimidazolium-ethansulfonat, 1,3-Diethylimidazolium triflat,
1-Ethyl-3-methylimidazolium-methylsulfat, 1-Ethyl-3-methylimidazolium-ethylsulfat, 1-Ethyl-3-methylimidazolium-hydrogensulfat, 1-Ethyl-3-methylimidazolium thiocyanat, 1-Ethyl-3-methylimidazolium acetat, 1-Ethyl-3-methylimidazolium methansulfonat, 1-Ethyl-3-methylimidazoliumethansulfonat, 1-Ethyl-3-methylimidazolium triflat 1-Ethyl-3-methylimidazolium diethylphosphat, 1-(1-Butyl)-3-methylimidazolium methylsulfat, 1-(1-Butyl)-3-methylimidazolium hydrogensulfat, 1-(1-Butyl)-3-methylimidazolium thiocyanat, 1-(1-Butyl)-3-methylimidazolium acetat, 1-(1-Butyl)-3-methylimidazolium methansulfonat, 1-(1-Dodecyl)-3-methylimidazolium methylsulfat, 1-(1-Dodecyl)-3-methylimidazolium hydrogensulfat, 1-(1-Tetradecyl)-3-methylimidazolium methylsulfat, 1-(1-Tetradecyl)-3-methylimidazolium hydrogensulfat, 1-(1-Hexadecyl)-3-methylimidazolium methylsulfat oder 1-(1-Hexadecyl)-3-methylimidazolium hydrogensulfat, 2-Hydroxyethylammonium formiat oder Methyl-tributylammonium methylsulfat.

### Zur Verbindung

Erfindungsgemäß wird die Viskosität der ionischen Flüssigkeit durch Zugabe einer oligomeren oder polymeren Verbindung eingestellt.

Die oligomere oder polymere Verbindung hat einen Gehalt von mindestens 0,01 mol, vorzugsweise mindestens 0,05 mol, besonders bevorzugt mindestens 0,1 mol, insbesondere mindestens 0,2 mol und in einer besonderen Ausführungsform mindestens 0,3 mol kovalent gebundener Säuregruppen auf 100g der Verbindung. Die obere Grenze des Gehalts dieser Säuregruppen ist je nach Art der Verbindung durch den rein theoretisch maximal möglichen Gehalt festgelegt; im Allgemeinen ist dieser Gehalt nicht größer als 1,4 mol, welche z.B. bei der Polyacrylsäure nahezu erreicht wird, insbesondere nicht größer als 1,2 mol je 100g Verbindung.

Ein derart hoher Gehalt an Säuregruppen ist für die Vorteile der Erfindung im Allgemeinen nicht notwendig, sehr gute Ergebnisse werden bereits bei einem geringen Gehalt an Säuregruppen erzielt, wie er den obigen Untergrenzen entspricht.

Die vorstehende Angabe "100g der Verbindung" bezieht sich dabei auf die oligomere oder polymere Verbindung als reine Säure, ohne Berücksichtigung der Tatsache, dass die Säuregruppen der Verbindung teilweise oder ganz in Salze mit dem obigen organischen Kation überführt sind. Ansonsten wird in dieser Anmeldung unter oligomere oder polymere Verbindung grundsätzlich immer die gesamte Verbindung inklusive der Kationen verstanden.

Bei den Säuregruppen handelt es sich z.B. um Carbonsäuregruppen, Sulfonsäuregruppen oder Phosphonsäuregruppen. Bevorzugt sind Carbonsäuregruppen und Sulfonsäuregruppen.

Die oligomere oder polymere Verbindung ist z.B. ein Polykondendsat, ein Polyaddukt oder ein durch radikalische Polymerisation erhältliches Polymer, welches dementsprechend zu mindest zum Teil aus wiederkehrenden Einheiten besteht. Entsprechend enthält die oligomere oder polymere Verbindung im Allgemeinen im Mittel mindestens 4, insbesondere mindestens 10 Säuregruppen im Molekül.

Die Verbindung kann zum Beispiel ein Molekulargewicht von z.B. 300g/mol bis 250.000 g/mol haben.

Bevorzugte Verbindungen haben ein Molekulargewicht von mindestens 500, ganz besonders bevorzugt von mindestens 1.000 oder auch von mindestens 5.000 g/mol. Im Allgemeinen beträgt das Molekulargewicht maximal 200.000, insbesondere maximal 150.000 g/mol. Genannt seien z.B. auch Verbindungen mit einem Molekulargewicht von 10.000 bis 150.000 bzw. 30.000 bis 120.000 g/mol. Bei den vorstehenden Angaben zum Molgewicht sind die zugehörigen Kationen nicht berücksichtigt.

Bei dem vorstehenden Molekulargewicht handelt es sich um das zahlenmittlere Molekulargewicht Mn, welches durch bekannte Methoden, wie Gelpermeationschromatographie oder Endgruppenbestimmung ermittelt werden kann.

Die Säuregruppen der oligomeren oder polymeren Verbindung liegen zumindest zum Teil oder auch vollständig als Salz mit dem obigen organischen Kation vor, d.h. Carbonsäuregruppen liegen entsprechend ganz oder teilweise als Carboxylate und Sulfonsäuregruppen ganz oder teilweise als Sulfonate vor. Vorzugsweise liegen mindestens 10 %, insbesondere zu mindestens 20 % oder mindestens 50 % der Säuregruppen als Salz mit dem organischen Kation vor. In einer besonderen Ausführungsform liegen mehr als 80 %, insbesondere 100 % der Säuregruppen als Salz mit dem organischen Kation vor.

Die oligomere oder polymere Verbindung kann bei Raumtemperatur (21°C) fest oder flüssig sein.

Bevorzugte oligomere oder polymere Verbindungen sind bei 21°C (1 bar) mit Wasser homogen mischbar oder haben bei 21°C (1 bar) in Wasser eine Löslichkeit von mindestens 20g, vorzugsweise mindestens 30g Verbindung in 100 g Wasser.

Nachstehend werden bevorzugte oligomere oder polymere Verbindungen genannt.

Als Verbindungen mit Carbonsäuregruppen kommen z.B. Poly(meth)acrylsäure oder (Meth)-acrylsäurecopolymere, welche zu mindestens 10 Gew.-%, insbesondere zu mindestens 20 Gew.-% oder mindestens 50 Gew.-% aus Acrylsäure oder Methacrylsäure (kurz (Meth)-acrylsäure) bestehen, in Betracht; wobei mindestens 1 %, insbesondere mindestens 10%, ganz besonders bevorzugt mindestens 20 % der Carbonsäuregruppen als Carboxylatgruppen mit dem organischen Kation vorliegen.

Als Verbindungen mit Sulfonsäuregruppen kommen Polystyrolsulfonsäure oder Styrolsulfonsäurecopolymere, welche zu mindestens 10 Gew.-%, insbesondere zu mindestens 20 Gew.-% oder mindestens 50 Gew.-% aus Styrolsulfonsäure bestehen, in Betracht, wobei mindestens 1 %, insbesondere mindestens 10%, ganz besonders bevorzugt mindestens 20 % der Sulfonsäuregruppen als Sulfonatgruppen mit dem organischen Kation vorliegen.

Als Verbindungen mit Sulfonsäuregruppen kommen auch Poly-2-acrylamido-2-methylpropansulfonsäure (kurz Poly-AMPS) oder Copolymere, welche zu mindestens 10 Gew.-%, insbesondere zu mindestens 20 Gew.-% oder mindestens 50 Gew.-% aus 2-Acrylamido-2-methylpropansulfonsäure bestehen, in Betracht, wobei mindestens 1 %, insbesondere mindestens 10%, ganz besonders bevorzugt mindestens 20 % der Sulfonsäuregruppen als Sulfonatgruppen mit dem organischen Kation vorliegen.

### Zum organischen Kation

Organische Kationen, die mit den Säuregruppen der oligomeren oder polymeren Verbindung ein Salz bilden, enthalten mindestens ein Heteroatom ausgewählt aus Stickstoff, Schwefel, Sauerstoff oder Phosphor. Insbesondere handelt es sich um Kationen mit einem heterocyclischen Ringsystem, wobei es sich bei dem oder den Heteroatomen um Stickstoff, Schwefel, Sauerstoff oder Phosphor handelt.

Als organischen Kationen in Betracht kommen Verbindungen mit einer kationischen Gruppe ausgewählt aus einer Ammonium - Gruppe, einer Oxonium -Gruppe, einer Sulfonium - Gruppe oder einer Phosphonium - Gruppe.

In einer besonderen Ausführungsform handelt es sich um Ammonium - kationen, worunter hier nicht-aromatische Kationen mit lokalisierter positiver Ladung am Stickstoffatom, z.B. Verbindungen mit vierbindigem Stickstoff (quaternäre Ammoniumverbindungen) oder auch Kationen mit dreibindigem Stickstoff, wobei eine Bindung eine Doppelbindung ist, oder aromatische Kationen mit delokalisierter positiver Ladung und mindestens einem, vorzugsweise einem oder zwei Stickstoffatomen im Ringsystem verstanden werden.

Genannt seien z.B. quaternäre Ammoniumkationen mit vorzugsweise drei oder vier aliphatischen Substituenten, besonders bevorzugt C1- bis C12- Alkylgruppen, am Stickstoffatom als organische Kationen.

Besonders bevorzugt sind organische Kationen, die ein heterocyclisches Ringsystem mit mindestens einem Stickstoffatom, vorzugsweise ein oder zwei Stickstoffatomen, als Bestandteil des Ringsystems enthalten. In Betracht kommen monocyclische, bicyclische, aromatische oder nicht-aromatische Ringsysteme. Genannt seien z.B. bicyclische Systeme, wie sie in WO 2008/043837 beschrieben sind. Bei den bicyclischen Systemen der WO 2008/043837 handelt es sich um Diazabicyclo-derivate, vorzugsweise aus einem 7- und einem 6 Ring, welche eine Amidiniumgruppe enthalten; genannt sei insbesondere das 1,8-Diazabicyclo(5.4.0)undec7-enium- kation.

Ganz besonders bevorzugte organische Kationen enthalten ein fünf- oder sechsgliedriges heterocyclisches Ringsystem mit ein oder zwei Stickstoffatomen als Bestandteil des heterocyclischen Ringsystems.

Als Kationen in Betracht kommen z.B. Pyridinium-Kationen, Pyridazinium-Kationen, Pyrimidinium-Kationen, Pyrazinium-Kationen, Imidazolium-Kationen, Pyrazolium-Kationen, Pyrazolinium-Kationen, Imidazolinium-Kationen, Thiazolium-Kationen, Triazolium-Kationen, Pyrrolidinium-Kationen und Imidazolidinium-Kationen. Diese Kationen sind z.B. in WO 2005/113702 aufgeführt. Soweit es für eine positive Ladung am Stickstoffatom oder im aromatischen Ringsystem notwendig ist, sind die Stickstoffatome jeweils durch ein H-Atom oder vorzugsweise eine organische Gruppen mit im Allgemeinen nicht mehr als 20 C-Atomen, vorzugsweise eine Kohlenwasserstoffgruppe, insbesondere eine C1 bis C16 Alkylgruppe, insbesondere eine C1 bis C10, besonders bevorzugt eine C1 bis C4 Alkylgruppen substituiert.

Auch die Kohlenstoffatome des Ringsystems können durch organische Gruppen mit im Allgemeinen nicht mehr als 20 C-Atomen, vorzugsweise eine Kohlenwasserstoffgruppe, insbesondere eine C1 bis C16 Alkylgruppe, insbesondere eine C1 bis C10, besonders bevorzugt eine C1 bis C4 Alkylgruppen substituiert sein.

Besonders bevorzugt sind Imidazolium - Kationen, Pyrimidinium- Kationen und Pyrazolium-Kationen.

Ganz besonders bevorzugt sind Imidazolium - Kationen.

Besonders bevorzugte Imdazolium-Kationen sind solche der Formel I, welches dem Imidazolium-Kation in der obigen Formel II entspricht: 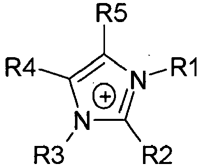 R1 bis R5 haben die obige, bei Formel II angegebene Bedeutung.

In einer besonderen Ausführungsform ist das Kation der ionischen Flüssigkeit mit dem Kation der oligomeren oder polymeren Verbindung identisch; insbesondere kann es sich um identische Imidazolium-Kationen handeln.

### Herstellung der oligomeren oder polymeren Verbindung

Poly(meth)acrylsäure oder (Meth)acrylsäurecopolymere können durch radikalische Polymerisation, insbesondere durch Lösungspolymerisation oder Substanzpolymerisation, von Acrylsäure bzw Methacrylsäure und im Falle der Copolymeren von weiteren radikalisch polymerisierbaren Monomeren erhalten werden.

Als (Meth)acrylsäurecopolymere in Betracht kommen solche mit beliebigen Comonomeren, z.B. einem oder mehreren Comonomeren ausgewählt aus Acrylsäureestern, Vinylestern, Vinylethern, Vinylaromaten, wie Styrol, Olefinen wie Ethylen oder Propylen, oder Vinylhalogeniden. Die Comonomere können funktionelle Gruppen enthalten, z.B. die vorstehend als zwingend genannten Säuregruppen, Säureamidgruppen oder Hydroxylgruppen oder sonstige funktionalle Gruppen.

Bevorzugt sind Poly(meth)acrylsäure oder (Meth)acrylsäurecopolymere von Acrylsäure oder Methacrylsäure mit Maleinsäure bzw. Maleinsäureanhydrid. Poly(meth)acrylsäure und (Meth)-acrylsäurecopolymere werden z.B. von BASF unter der Marke Sokalan® angeboten.

Die Überführung der Säuregruppen in die entsprechenden Salzgruppen mit dem organischen Kation kann in bekannter Weise erfolgen. Dazu kann die oligomere oder polymere Verbindung in einem geeigneten Lösemittel, z.B. Wasser gelöst werden und das gewünschte organische Kation als Salz mit einem basischen Anion, z.B. Hydroxid oder Methylcarbonat zugegeben werden. Es handelt sich dabei um eine einfache Neutralisierung der Säure mit dem basischen Salz, dabei werden die Säuregruppen in die Salzgruppen mit dem organischen Kation überführt. Das Lösemittel und das entstandene Neutralisierungsprodukt (z.B. Wasser, Methanol) kann, wenn gewünscht anschließend entfernt werden. Alternativ können auch bereits die Säuregruppen der Monomere in die gewünschten Salzgruppen überführt werden, anschließend kann die Herstellung der oligomeren oder polymeren Verbindung durch Polymerisation oder Copolymerisation der Monomeren mit Salzgruppen erfolgen. Erwähnt sei auch die Möglichkeit Monomere mit Säuregruppen in Gegenwart eines basischen Salzes des organischen Kations zu polymerisieren, wobei die Herstellung der Verbindung und die Überführung in die entsprechenden Salzgruppen in einem Schritt erfolgt.

### Zur Viskositätseinstellung und den Zusammensetzungen

Unter dem Begriff ionischer Flüssigkeit soll im Folgenden auch ein Gemisch von ionischen Flüssigkeiten und unter dem Begriff Verbindung soll im Folgenden auch ein Gemisch von verschiedenen oligomeren oder polymeren Verbindungen verstanden werden.

Die oligomere oder polymere Verbindung wird der ionischen Flüssigkeit vorzugsweise in einer Menge von 0,1 bis 35 Gew.-Teilen, insbesondere von 0,1 bis 30 Gew.-Teilen auf 100 Gew.-Teile, besonders bevorzugt in Mengen von 1 bis 25 Gew.-Teilen, insbesondere 1 bis 20 Gew.-Teilen und ganz besonders bevorzugt in Mengen von 2 bis 20 Gew.-Teilen, insbesondere von 2 bis 15 Gew.-Teilen auf 100 Gew.-Teile ionischer Flüssigkeit zugesetzt. Die Verbindung ist in der ionischen Flüssigkeit gut löslich, so dass die erhaltenen Zusammensetzungen stets homogen sind.

Durch die Zugabe der Verbindung wird die Viskosität der ionischen Flüssigkeit erhöht.

Die Verbindung kann zur reinen ionischen Flüssigkeit zugesetzt werden, sie kann aber auch Gemischen zugesetzt werden, welche neben der ionischen Flüssigkeit weitere Stoffe enthalten; es kann sich dabei z.B. um Stoffe wie Lösemittel oder in der ionischen Flüssigkeit gelöste Stoffe handeln. Derartige Gemische können z.B. während einer Verwendung von ionischen Flüssigkeiten entstehen. Es ist daher auch ein Vorteil des erfindungsgemäßen Verfahrens, das die Viskosität noch während der Verwendung der ionischen Flüssigkeit (siehe unten) durch Zugabe der Verbindung erhöht bzw. angepasst werden kann.

In einer besonders bevorzugten Ausführungsform kann der ionischen Flüssigkeit zusätzlich ein weiteres, nicht ionisches Lösemittel zugesetzt werden. Es handelt sich dabei bevorzugt um ein Lösemittel, welches mit der ionischen Flüssigkeit bei 21°C (1 bar) homogen mischbar ist und bei 21°C, 1 bar eine Dielektrizitätskonstante größer 7,5 hat.

Bevorzugte Lösemittel sind polare aliphatische Lösemittel mit Hydroxylgruppen oder Ethergruppen.

Als Bevorzugte genannt seien insbesondere Wasser und Methanol oder deren Gemische.

Die Menge des nicht-ionischen Lösemittels, insbesondere Wasser oder Methanol, beträgt vorzugsweise mindestens 1 Gew. Teil, insbesondere mindestens 5 Gew.-Teile, besonders bevorzugt mindestens 10 Gew.-Teile und ganz besonders bevorzugt mindestens 20 Gew.-Teile auf 100 Gew.-Teile ionische Flüssigkeit.

Das nicht-ionische Lösemittel kann der ionischen Flüssigkeit vorzugsweise in Mengen von 1 bis 150 Gew.-Teilen, besonders bevorzugt von 5 bis 100 Gew.-% und ganz besonders bevorzugt von 10 bis 80 Gew.-Teilen, insbesondere von 20 bis 60 Gew.-Teilen auf 100 Gew.-Teile ionischer Flüssigkeit zugesetzt werden.

Über die Art und Zeitpunkt der Zugabe gelten hier die vorstehenden Ausführungen zur Zugabe der Verbindung.

Durch Zugabe des nicht ionischen Lösemittels kann die Temperaturabhängigkeit der Viskosität vermindert werden, was für viele Anwendungen mit einem breiten Temperaturbereich von Bedeutung ist. Insbesondere ist der Viskositätsanstieg auch bei hohen Temperaturen noch sehr deutlich.

Durch die Zugabe der Verbindung zur ionischen Flüssigkeit sind Zusammensetzungen erhältlich, welche eine ionische Flüssigkeit und die vorstehenden Verbindung enthalten. Ebenso sind Zusammensetzungen erhältlich, die eine ionische Flüssigkeit, die vorstehenden Verbindung und das vorstehende Lösemittel enthalten.

Die Zusammensetzungen können insbesondere weitere Zusatzstoffe enthalten, die bei der beabsichtigten Verwendung der Zusammensetzung erforderlich oder hilfreich sind. Das können z.B. Korrosionsinhibitoren, Entschäumer, extrem pressure- oder anti wear-Additive sein. Extrem pressure Additive verhindern das Verschweißen von 2 metallischen Werkstoffen unter hohem Druck; anti wear-Additive vermindern den Abrieb bzw. Abnutzung bei hoher Reibung bzw. Belastung.

Die Zusammensetzungen können zu mehr als 70 Gew.-%, insbesondere zu mehr als 90 Gew.-% und besonders bevorzugt zu mehr als 95 Gew.-%, bzw. zu mehr als 98 Gew.-% oder ausschließlich (100 Gew.-%) aus der ionischen Flüssigkeit, der oligomeren- oder polymeren Verbindung und ggf. dem Lösemittel bestehen. Dies ist insbesondere vor ihrer Verbindung und ggf. dem Lösemittel bestehen. Dies ist insbesondere vor ihrer Verwendung der Fall; während der Verwendung können bedingt durch die Art der Verwendung weitere Stoffe in der Zusammensetzung enthalten sein.

Die Viskosität der Zusammensetzung beträgt im Falle, dass sie zu mehr als 90 Gew.-% aus der ionischen Flüssigkeit, der Verbindung und dem Lösemittel besteht, vorzugsweise 10 mPa*s bis 2.500 mPa*s bei 20 °C. Die angegebene Viskosität ist die dynamische Viskosität.

Die verwendete Zusammensetzung besteht in einer bevorzugten Ausführungsform aus
100 Gew.-Teilen ionischer Flüssigkeit, wobei es sich um eine ionische Flüssigkeit oder ein Gemisch von ionischen Flüssigkeiten handeln kann, und
0,1 bis 40 Gew.-Teilen, insbesondere 0,5 bis 30 Gew.-Teilen, besonders bevorzugt 0,5 bis 20 Gew.-Teilen oligomerer oder polymerer Verbindung,
0 bis 150 Gew.-Teilen, insbesondere 0 bis 60 Gew.-Teilen, besonders bevorzugt 0 bis 30 Gew.-Teile nicht-ionische Lösemittel und
0 bis 40 Gew.-Teilen, insbesondere 0 bis 20 Gew.-Teilen und besonders bevorzugt 0 bis 10 Gew.-Teilen sonstige Zusatzstoffe, .z.B. oben genannte Zusatzstoffe In einer besonders bevorzugten Ausführungsform enthält die efindüngsgemäße Zusammensetzung nicht-ionische Lösemittel in den oben angegebenen Mindestmengen.

Die Zusammensetzung wird als Schmiermittel, Hydraulikflüssigkeit, Betriebsflüssigkeit in Vorrichtungen, z.B. als Absorptionsmittel in thermodynamischen Kreisprozessen, die auf Absorption- und Desorption beruhen, als Wärmeträger, zum Wärmetransport oder als Abdicht- bzw. Absperrflüssigkeit verwendet. Die Zusammensetzungen sind homogen, da sich die zugesetzte oligomere oder polymere Verbindung gut in der ionischen Flüssigkeit löst. Insbesondere ist auch festzustellen, dass die Zusammensetzungen bereits ohne zusätzlichen Korrosionsinihibitor eine verminderte Korrosion zeigen. Die oligomere oder polymere Verbindung mit den organischen Kationen wirkt daher wie ein Korrosioninhibitor und vermindert in vielen Fällen eine Korrosion, wie sie oft bei ionischen Flüssigkeiten, insbesondere bei ionischen Flüssigkeiten mit Anionen, welche Sulfat- oder Sulfonatgruppen enthalten, in Kontakt mit Metallen, insbesondere unedlen Stählen, zu beobachten ist.

### Beispiele

### Verwendete ionische Flüssigkeit

Als ionische Flüssigkeit wurde das Methylsulfonat des 1-Ethyl-3-methyl-imidazolium (EMIM) verwendet: EMIM-methylsulfonat (EMIM-MeSO₃)

Als polymere Verbindungen wurden verwendet:
Polystyrolsulfonsäure
Poly-2-acrylamido-2-methylpropansulfonsäure (kurz Poly-AMPS)
Überführung der Säuregruppen der polymeren Verbindung in Salzgruppen

Die Überführung der Säuregruppen der polymeren Verbindung in Salzgruppen erfolgte durch Umsetzung einer wässrigen Lösung des jeweiligen Polymeren mit 1-Ethyl-3-methylimidazoliumhydroxid bzw. mit einem quatarnären Ammoniumsalz (Hydroxid des Tetrabutylammoniums Bu₄N) Das Lösungsmittel wurde unter reduziertem Druck und bei erhöhter Temperatur entfernt. Die Säuregruppen wurden vollständig in die entsprechenden Salzgruppen überführt. Die erhaltenen Polymere mit EMIM als Kationen werden wie folgt bezeichnet:
EMIM Polystyrolsulfonat
Bu₄N Polystyrolsulfonat
Herstellung der Mischungen

Die Einsatzstoffe wurden in den in der Tabelle angegebenen Mengen gemischt, wobei die angegebenen Gew.-Teile Verbindung jeweils zu 100 Gew.-Teilen der ionischen Flüssigkeit zugesetzt wurden. Gegebenenfalls wurde dieser Mischung noch Wasser hinzugesetzt. Die Viskosität der Mischungen wurde bei verschiedenen Temperaturen bestimmt.

In Tabelle 1 sind die Zusammensetzung der Mischungen und die Viskositäten angegeben.

### Korrosions-test

Tropfen einer Mischung aus EMIM MeSO₃ + 3 Gew.% EMIM Polystyrolsulfonat und zum Vergleich von EMIM MeSO₃ ohne Zusatz wurden auf Metallplatten(unedler Kohlenstoff-Stahl, Stahlschlüssel 1.0036) gegeben. Die Metallplatten wurden 24 Stunden unter Luft bei 90°C im Trockenschrank gelagert, danach wurden die Metallplatten mit einem Lösemittel (Ethanol und/oder Aceton) gereinigt und die Korrosion optisch beurteilt.

EMIM MeSO₃ allein führte zu deutlichen, korrosiven Veränderungen auf der Oberfläche der Metallplatte. Bei EMIM MeSO₃ + 3 Gew.-% EMIM Polystyrolsulfonat zeigte die Oberfläche keinerlei Schädigungen oder farbliche Veränderungen

**Tabelle 1: Viskositäten**

| IL | Wassergehalt /gew.-% | Viskosität 20°C /mPa*s | Viskosität 40°C /mPa*s | Viskosität 100°C /mPa*s |
|---|---|---|---|---|
| EMIM MeSO₃ | 10,8 | 32 | 15 | 6 |
| EMIM MeSO₃ + 5% Bu₄N Polystyrolsulfonat | 8,8 | 393 | 132 | 21 |
| EMIM MeSO₃ + 10% EMIM Polystyrolsulfonat | 10,3 | 164 | 70 | 16 |
| EMIM MeSO₃ + 5% EMIM AM PS | 10,6 | 192 | 85 | 20 |

## Patentansprüche

1. Verfahren zur Einstellung der Viskosität eines Salzes mit einem Schmelzpunkt kleiner 100°C bei Normaldruck (kurz ionische Flüssigkeit genannt), **dadurch gekennzeichnet, dass** der ionischen Flüssigkeit eine oligomere oder polymere Verbindung zugesetzt wird, welche
einen Gehalt von mindestens 0,01 Mol kovalent gebundener Säuregruppen/100g Verbindung hat, wobei zumindest 1% der Säureguppen als Salz mit einem organische Kation, welches mindestens ein Heteroatom, ausgewählt aus Stickstoff, Sauerstoff, Schwefel oder Phosphor enthält, vorliegen.

2. Verfahren gemäß Anspruch 1, **dadurch gekennzeichnet, dass** es sich bei der ionischen Flüssigkeit um ein Salz mit einem organischen, heterocyclischen Kation mit ein oder zwei Stickstoffatomen als Bestandteil des heterocyclischen Ringsystems handelt.

3. Verfahren gemäß Anspruch 1 oder 2, **dadurch gekennzeichnet, dass** es sich bei der ionischen Flüssigkeit um ein Salz mit einem Imidazolium-Kation handelt.

4. Verfahren gemäß einem der Ansprüche 1 bis 3, **dadurch gekennzeichnet, dass** die zugesetzte Verbindung im Mittel mindestens 4 Säuregruppen im Molekül enthält.

5. Verfahren gemäß einem der Ansprüche 1 bis 4, **dadurch gekennzeichnet, dass** der Gehalt der Säuregruppen und der daraus abgeleiteten Salzgruppen mindestens 0,1 mol/100g Verbindung beträgt.

6. Verfahren gemäß einem der Ansprüche 1 bis 5, **dadurch gekennzeichnet, dass** es sich bei den Säuregruppen um Carbonsäure- oder Sulfonsäuregruppen und entsprechend bei den daraus abgeleiteten Salzgruppen um Carboxylat- oder Sulfonatgruppen handelt.

7. Verfahren gemäß einem der Ansprüche 1 bis 6, **dadurch gekennzeichnet, dass** es sich bei der Verbindung um Poly(meth)acrylsäure oder ein (Meth)acrylsäurecopolymer, welches zu mindestens 10 Gew. % aus (Meth)acrylsäure besteht, handelt, wobei mindestens 1% der Säuregruppen als Carboxylatgruppen mit dem organischen Kation vorliegen.

8. Verfahren gemäß einem der Ansprüche 1 bis 6, **dadurch gekennzeichnet, dass** es sich bei der Verbindung um Polystyrolsulfonsäure, Poly-2-acrylamido-2-methylpropansulfonsäure, ein Styrolsulfonsäurecopolymer, welches mindestens 10 Gew. % aus Styrolsulfonsäure besteht, oder ein 2-Acrylamido-2-methylpropansulfonsäurecopolymer, welches mindestens 10 Gew. % aus 2-Acrylamido-2-methylpropansulfonsäure besteht, handelt, wobei mindestens 1% der Säuregruppen als Sulfonatgruppen mit dem organischen Kation vorliegen.

9. Verfahren gemäß einem der Ansprüche 1 bis 8, **dadurch gekennzeichnet, dass** es sich bei den zugehörigen Kationen um Kationen mit einem heterocylischen Ringsystem handelt.

10. Verfahren gemäß einem der Ansprüche 1 bis 9, **dadurch gekennzeichnet, dass** es sich bei den zugehörigen Kationen um Kationen handelt, welche ein heterocylischen Ringsystem mit mindestens einem Stickstoffatom enthalten.

11. Verfahren gemäß einem der Ansprüche 1 bis 10, **dadurch gekennzeichnet, dass** es sich bei den zugehörigen Kationen um Kationen handelt, welche ausgewählt sind aus Pyridinium-Kationen, Pyridazinium-Kationen, Pyrimidinium-Kationen, Pyrazinium-Kationen, Imidazolium-Kationen, Pyrazolium-Kationen, Pyrazolinium-Kationen, Imidazolinium-Kationen, Thiazolium-Kationen, Triazolium-Kationen, Pyrrolidinium-Kationen und Imidazolidinium-Kationen.

12. Verfahren gemäß einem der Ansprüche 1 bis 11, **dadurch gekennzeichnet, dass** es sich bei den Kationen um Imidazolium-Kationen der Formel I 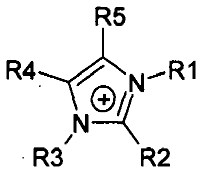 handelt, worin
R1 und R3 unabhängig voneinander für ein H-Atom oder eine organischen Gruppe mit 1 bis 20 C-Atomen stehen,
R2, R4, und R5 unabhängig voneinander für ein H-Atom oder für einen organische Gruppe mit 1 bis 20 C-Atomen stehen.

13. Verfahren gemäß einem der Ansprüche 1 bis 12, **dadurch gekennzeichnet, dass** das Kation der ionischen Flüssigkeit mit dem organischen Kation der zugesetzten Verbindung identisch ist.

14. Verfahren gemäß einem der Ansprüche 1 bis 13, **dadurch gekennzeichnet, dass** die Verbindung bei 21°C (1 bar) mit Wasser homogen mischbar ist oder bei 21°C (1 bar) in Wasser eine Löslichkeit von mindestens 20g Verbindung in 100 g Wasser besitzt.

15. Verfahren gemäß einem der Ansprüche 1 bis 14, **dadurch gekennzeichnet, dass** die Verbindung in einer Menge von 0,1 bis 30 Gew. teilen auf 100 Gew. teile ionischer Flüssigkeit zugesetzt wird.

16. Verfahren gemäß einem der Ansprüche 1 bis 15, **dadurch gekennzeichnet, dass** der ionischen Flüssigkeit zusätzlich ein Lösemittel zugesetzt wird, welches mit der ionischen Flüssigkeit bei 21°C (1 bar) homogen mischbar ist und eine Dielektrizitätskonstante größer 7,5 hat.

17. Verwendung der Zusammensetzung, enthaltend eine ionische Flüssigkeit und eine oligomere oder polymere Verbindung, welche einen Gehalt von mindestens 0,01 Mol kovalent gebundener Säuregruppen/100g Verbindung hat, wobei zumindest 1% der Säureguppen als Salz mit einem organischen Kation, welches mindestens ein Heteroatom, ausgewählt aus Stickstoff, Sauerstoff, Schwefel oder Phosphor enthält, vorliegen, als Schmiermittel, Hydraulikflüssigkeit, Betriebsflüssigkeit, als Wärmeträger, zum Wärmetransport oder als Abdicht- bzw. Absperrflüssigkeit.

## Claims

1. A method of adjusting the viscosity of a salt having a melting point of less than 100°C at atmospheric pressure (referred to as ionic liquid for short), wherein an oligomeric or polymeric compound which has a content of at least 0.01 mol of covalently bound acid groups/100 g of compound with at least 1% of the acid groups being present as a salt with an organic cation comprising at least one heteroatom selected from among nitrogen, oxygen, sulfur and phosphorus is added to the ionic liquid.

2. The method according to claim 1, wherein the ionic liquid is a salt having an organic, heterocyclic cation having one or two nitrogen atoms as constituent of the heterocyclic ring system.

3. The method according to claim 1 or 2, wherein the ionic liquid is a salt having an imidazolium cation.

4. The method according to any of claims 1 to 3, wherein the compound added has an average of at least 4 acid groups in the molecule.

5. The method according to any of claims 1 to 4, wherein the content of the acid groups and salt groups derived therefrom is at least 0.1 mol/100 g of compound.

6. The method according to any of claims 1 to 5, wherein the acid groups are carboxylic acid groups or sulfonic acid groups and the salt groups derived therefrom are correspondingly carboxylate groups or sulfonate groups.

7. The method according to any of claims 1 to 6, wherein the compound is poly(meth)acrylic acid or a (meth)acrylic acid copolymer comprising at least 10% by weight of (meth)acrylic acid, where at least 1% of the acid groups are present as carboxylate groups with the organic cation.

8. The method according to any of claims 1 to 6, wherein the compound is polystyrenesulfonic acid, poly-2-acrylamido-2-methylpropanesulfonic acid, a styrenesulfonic acid copolymer comprising at least 10% by weight of styrenesulfonic acid or a 2-acrylamido-2-methylpropanesulfonic acid copolymer comprising at least 10% by weight of 2-acrylamido-2-methylpropanesulfonic acid, where at least 1% of the acid groups are present as sulfonate groups with the organic cation.

9. The method according to any of claims 1 to 8, wherein the associated cations are cations having a heterocylic ring system.

10. The method according to any of claims 1 to 9, wherein the associated cations are cations comprising a heterocylic ring system having at least one nitrogen atom.

11. The method according to any of claims 1 to 10, wherein the associated cations are cations selected from among pyridinium cations, pyridazinium cations, pyrimidinium cations, pyrazinium cations, imidazolium cations, pyrazolium cations, pyrazolinium cations, imidazolinium cations, thiazolium cations, triazolium cations, pyrrolidinium cations and imidazolidinium cations.

12. The method according to any of claims 1 to 11, wherein the cations are imidazolium cations of the formula I 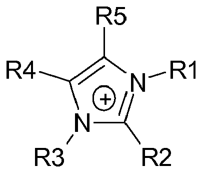 where
R1 and R3 are each, independently of one another, an H atom or an organic group having from 1 to 20 carbon atoms,
R2, R4 and R5 are each, independently of one another, an H atom or an organic group having from 1 to 20 carbon atoms.

13. The method according to any of claims 1 to 12, wherein the cation of the ionic liquid is identical to the organic cation of the added compound.

14. The method according to any of claims 1 to 13, wherein the compound is homogeneously miscible with water at 21°C (1 bar) or has a solubility in water at 21°C (1 bar) of at least 20 g of compound in 100 g of water.

15. The method according to any of claims 1 to 14, wherein the compound is added in an amount of from 0.1 to 30 parts by weight per 100 parts by weight of ionic liquid.

16. The method according to any of claims 1 to 15, wherein a solvent which is homogeneously miscible with the ionic liquid at 21°C (1 bar) and has a dielectric constant of greater than 7.5 is additionally added to the ionic liquid.

17. The use of the composition comprising an ionic liquid and an oligomeric or polymeric compound which has a content of at least 0.01 mol of covalently bound acid groups/100 g of compound, with at least 1% of the acid groups being present as a salt with an organic cation comprising at least one heteroatom selected from among nitrogen, oxygen, sulfur and phosphorus, as lubricant, hydraulic fluid, operating fluid, as heat transfer medium, for heat transport or as sealing or barrier liquid.

## Revendications

1. Procédé pour l'ajustement de la viscosité d'un sel ayant un point de fusion inférieur à 100 °C sous la pression normale (dénommé plus brièvement liquide ionique), **caractérisé en ce qu'**on ajoute au liquide ionique un composé oligomère ou polymère qui
a une teneur d'au moins 0,01 mole en groupes acides liés par covalence/100 g de composé, au moins 1 % des groupes acides se trouvant sous forme de sel avec un cation organique qui contient au moins un hétéroatome, choisi parmi les atomes d'azote, d'oxygène, de soufre ou de phosphore.

2. Procédé selon la revendication 1, **caractérisé en ce que** le liquide ionique consiste en un sel avec un cation organique hétérocyclique comportant un ou deux atomes d'azote en tant que composant du système hétérocyclique.

3. Procédé selon la revendication 1 ou 2, **caractérisé en ce que** le liquide ionique consiste en un sel comportant un cation imidazolium.

4. Procédé selon l'une quelconque des revendications 1 à 3, **caractérisé en ce que** le composé ajouté contient en moyenne au moins 4 groupes acide dans la molécule.

5. Procédé selon l'une quelconque des revendications 1 à 4, caractérisé en ce la teneur en les groupes acides et en les groupes sel dérivés de ceux-ci est d'au moins 0,1 mole/100 g de composé.

6. Procédé selon l'une quelconque des revendications 1 à 5, **caractérisé en ce que** les groupes acides consistent en des groupes carboxy ou sulfo et en conséquence les groupes sel qui en dérivent consistent en groupes carboxylate ou sulfonate.

7. Procédé selon l'une quelconque des revendications 1 à 6, **caractérisé en ce que** le composé consiste en poly(acide (méth)acrylique) ou en un copolymère d'acide (méth)acrylique, qui est constitué d'au moins 10 % en poids d'acide (méth)acrylique, au moins 1 % des groupes acides se trouvant sous forme de groupes carboxylate avec le cation organique.

8. Procédé selon l'une quelconque des revendications 1 à 6, **caractérisé en ce que** le composé consiste en poly(acide styrènesulfonique), poly(acide 2-acrylamido-2-méthylpropanesulfonique), un copolymère d'acide styrènesulfonique qui est constitué d'au moins 10 % en poids d'acide styrènesulfonique, ou un copolymère d'acide 2-acrylamido-2-méthylpropanesulfonique qui est constitué d'au moins 10 % en poids d'acide 2-acrylamido-2-méthylpropanesulfonique, au moins 1 % des groupes acides se trouvant sous forme de groupes sulfonate avec le cation organique.

9. Procédé selon l'une quelconque des revendications 1 à 8, **caractérisé en ce que** les cations correspondants consistent en des cations comportant un système cyclique hétérocyclique.

10. Procédé selon l'une quelconque des revendications 1 à 9, **caractérisé en ce que** les cations correspondants consistent en des cations qui contiennent un système cyclique hétérocyclique comportant au moins un atome d'azote.

11. Procédé selon l'une quelconque des revendications 1 à 10, **caractérisé en ce que** les cations correspondants consistent en des cations qui sont choisis parmi les cations pyridinium, les cations pyridazinium, les cations pyrimidinium, les cations pyrazinium, les cations imidazolium, les cations pyrazolium, les cations pyrazolinium, les cations imidazolinium, les cations thiazolium, les cations triazolium, les cations pyrrolidinium et les cations imidazolidinium.

12. Procédé selon l'une quelconque des revendications 1 à 11, **caractérisé en ce que** les cations consistent en des cations imidazolium de formule I 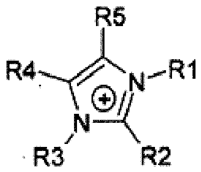 dans laquelle
R1 et R3 représentent chacun indépendamment un atome d'hydrogène ou un groupe organique ayant de 1 à 20 atomes de carbone,
R2, R4 et R5 représentent chacun indépendamment un atome d'hydrogène ou un groupe organique ayant de 1 à 20 atomes de carbone.

13. Procédé selon l'une quelconque des revendications 1 à 12, **caractérisé en ce que** le cation du liquide ionique est identique au cation organique du composé ajouté.

14. Procédé selon l'une quelconque des revendications 1 à 13, **caractérisé en ce que** le composé est miscible à l'eau en donnant une solution homogène à 21 °C (1 bar) ou présente dans l'eau à 21 °C (1 bar) une solubilité d'au moins 20 g de composé dans 100 g d'eau.

15. Procédé selon l'une quelconque des revendications 1 à 14, **caractérisé en ce qu'**on ajoute le composé en une quantité de 0,1 à 30 parties en poids pour 100 parties en poids de liquide ionique.

16. Procédé selon l'une quelconque des revendications 1 à 15, **caractérisé en ce qu'**en outre on ajoute au liquide ionique un solvant qui est miscible au liquide ionique en donnant une solution homogène à 21 °C (1 bar) et a une constante diélectrique supérieure à 7,5.

17. Utilisation de la composition, contenant un liquide ionique et un composé oligomère ou polymère qui a une teneur d'au moins 0,01 mole en groupes acides liés par covalence/100 g de composé, au moins 1 % des groupes acides se trouvant sous forme de sel avec un cation organique qui contient au moins un hétéroatome, choisi parmi les atomes d'azote, d'oxygène, de soufre ou de phosphore, en tant que lubrifiant, fluide hydraulique, liquide de fonctionnement, en tant que caloporteur, pour le transport de chaleur ou en tant que liquide d'étanchéité ou d'obturation.
